# EUROPEAN PATENT APPLICATION

(11) **EP 4 414 224 A1**
(43) Date of publication of application: **14.08.2024**
(21) Application number: 22878630.7
(22) Date of filing: 07.10.2022
(51) Int. Cl.: B60S 1/62, B05B 1/08, B05B 1/10, B05B 15/70, B08B 3/02

(54) **CLEANER NOZZLE**

(30) Priority: 08.10.2021 JP 2021166302; 08.10.2021 JP 2021166303; 08.10.2021 JP 2021166304; 08.10.2021 JP 2021166305
(71) Applicant: Koito Manufacturing Co., Ltd., Tokyo 108-8711 (JP)
(72) Inventor: KANAZAWA, Hironobu, Shizuoka-shi, Shizuoka 424-8764 (JP); MIURA, Riichiro, Shizuoka-shi, Shizuoka 424-8764 (JP)
(74) Representative: Cabinet Beau de Loménie
(86) International application number: PCT/JP2022/037700
(87) International publication number: WO 2023/058763

(57) **Abstract**

A cleaner nozzle (1) comprises: a tubular cylinder (10) that extends in the axial direction (Ax); and a piston that has a blowout port and that is displaceable in the axial direction (Ax) in the cylinder (10). The piston and the cylinder (10) are provided with suppression parts (17, 27) that suppress mutual displacement of the cylinder (10) and the piston about axial direction (Ax) when making contact with each other.

## Description

### TECHNICAL FIELD

The present disclosure relates to a cleaner nozzle.

### BACKGROUND ART

A cleaner nozzle as described in Patent Literature 1 is known.

### CITATION LIST

### PATENT LITERATURE

Patent Literature 1: JP2018-034646A

### SUMMARY OF INVENTION

### TECHNICAL PROBLEM

As shown in the cleaner nozzle described in Patent Literature 1, a piston is provided with an ejection port available to eject a cleaning liquid for cleaning a sensor such as a camera. To clean the sensor, the ejection port is required to face the sensor. However, the piston may be displaced relative to a cylinder about an axis of the cylinder, and the ejection port may deviate from the sensor.

The cleaner nozzle described in Patent Literature 1 further includes a coil spring inside the cylinder to return the piston to an original position.

However, when a position of the coil spring in a radial direction deviates inside the cylinder, the coil spring cannot uniformly apply an elastic restoring force to the piston. In this case, the piston would not be returned to the original position and, when the piston is pushed out against the elastic restoring force of the coil spring to discharge the cleaning liquid, a discharge position and discharge posture thereof deviate from an original position and posture.

In the cleaner nozzle described in Patent Literature 1, the piston can be further displaced in an axial direction of the cylinder.

Since a positional relationship between the cleaner nozzle and an object to be cleaned may differ depending on a vehicle type, it is required to adjust a displacement amount (a stroke amount) of the piston in the axial direction to reliably apply the cleaning liquid to the object to be cleaned. For this reason, the stroke amount of the piston obtained for each vehicle type differs. However, it takes time and effort to design cleaner nozzles of different specifications each time according to required stroke amounts.

A first object of the present disclosure is to provide a cleaner nozzle in which an ejection port is less likely to deviate from an object to be cleaned.

A second object of the present disclosure is to provide a cleaner nozzle in which a coil spring is prevented from deviating in a radial direction of a cylinder.

A third object of the present disclosure is to provide a cleaner nozzle that can be easily mounted on various types of vehicles.

### SOLUTION TO PROBLEM

A first aspect of the present disclosure provides a cleaner nozzle including:
a cylinder extending in an axial direction; and
a piston having an ejection port and being displaceable in the axial direction in the cylinder, wherein
the piston and the cylinder are provided with respective prevention portions that prevent relative displacement of the cylinder and the piston about an axis by coming into contact with each other.

A second aspect of the present disclosure provides a cleaner nozzle including:
a cylinder extending in an axial direction; and
a piston having an ejection port and being displaceable in the axial direction in the cylinder, wherein
the piston includes a protruding portion protruding in a radial direction of the cylinder, and
the piston is provided with a prevention portion that prevents displacement of the piston about an axis relative to the cylinder by coming into contact with the protruding portion.

A third aspect of the present disclosure provides a cleaner nozzle including:
a cylinder; and
a piston that is displaceable in an axial direction of the cylinder in the cylinder, wherein
the cylinder includes a cover portion covering at least a part of an opening,
a coil spring that moves the piston away from the cover portion is provided inside the cylinder, and
a guide portion that extends toward the coil spring in the axial direction and comes into contact with the coil spring is provided in the cover portion.

A fourth aspect of the present disclosure provides a cleaner nozzle including:
a cylinder; and
a piston displaceable in an axial direction of the cylinder relative to the cylinder, wherein
the cylinder includes a cylindrical portion and a cover portion that covers at least a part of an opening of the cylindrical portion and is separate from the cylindrical portion, and
the cover portion is provided with a guide portion that extends in the axial direction and restricts a length of the piston displaceable in the axial direction by coming into contact with the piston.

### ADVANTAGEOUS EFFECTS OF INVENTION

According to the present disclosure, it is possible to provide a cleaner nozzle in which an ejection port is less likely to deviate from an object to be cleaned. According to the present disclosure, it is possible to provide a cleaner nozzle in which a coil spring is prevented from deviating in a radial direction of a cylinder. It is also possible to provide a cleaner nozzle that can be easily mounted on various types of vehicles.

### BRIEF DESCRIPTION OF DRAWINGS

FIG. 1 is a schematic cross-sectional view showing an outline of a cleaner nozzle according to a first embodiment.
FIG. 2 is a perspective view of the cleaner nozzle according to the first embodiment.
FIG. 3 is a cross-sectional view taken along a line III-III in FIG. 2.
FIG. 4 is a cross-sectional view taken along a line IV-IV in FIG. 2.
FIG. 5 is a view seen from a direction V in FIG. 2.
FIG. 6 is a cross-sectional view taken along a line VI-VI in FIG. 4.
FIG. 7 is an exploded perspective view of the cleaner nozzle according to the present embodiment.
FIG. 8 shows a cleaner nozzle according to a first modification as viewed from an axial direction.
FIG. 9 shows a cleaner nozzle according to a second modification as viewed from an axial direction.
FIG. 10 is a perspective view of a cleaner nozzle according to a second embodiment.
FIG. 11 is a cross-sectional view taken along a line XI-XI in FIG. 10.
FIG. 12 is a cross-sectional view taken along a line XII-XII in FIG. 10.
FIG. 13 is a cross-sectional view taken along a line XIII-XIII in FIG. 12.
FIG. 14 is an exploded perspective view of the cleaner nozzle according to the second embodiment.
FIG. 15 is a cross-sectional view taken along a line XV-XV in FIG. 13.
FIG. 16A shows a restriction on a stroke amount by a restricting portion and a guide portion.
FIG. 16B shows the restriction on the stroke amount by the restricting portion and the guide portion.

### DESCRIPTION OF EMBODIMENTS

Hereinafter, embodiments of the present disclosure will be described with reference to the drawings. Members having the same reference numerals as those already described in the description of the embodiments will not be described for convenience of description. Further, for convenience of description, dimensions of members shown in the drawings may be different from actual dimensions of the members.

### First Embodiment

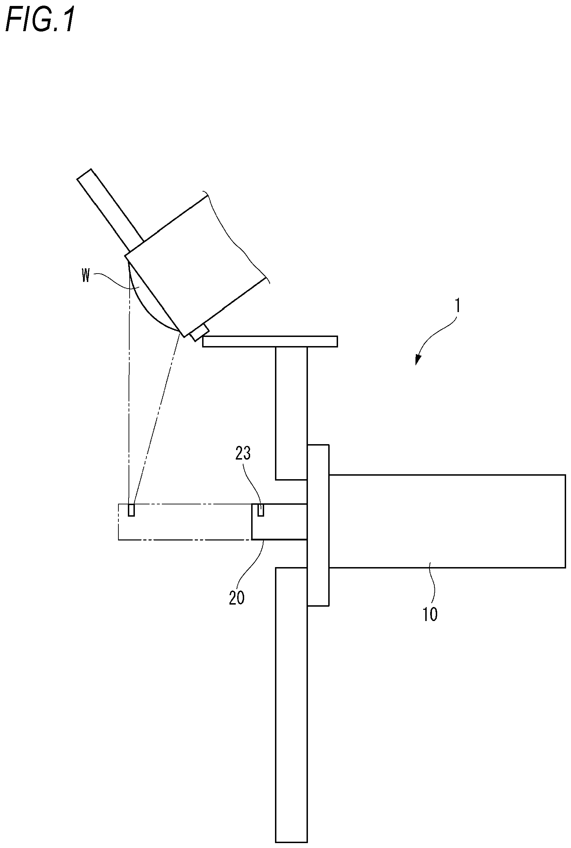

First, a cleaner nozzle 1 according to a first embodiment will be described. FIG. 1 is a cross-sectional view showing a state in which the cleaner nozzle 1 according to the first embodiment is attached to a vehicle. The cleaner nozzle 1 is attached to the vehicle and cleans a sensor W such as a camera or a LiDAR mounted on the vehicle. The cleaner nozzle 1 includes a cylinder 10 and a piston 20. The piston 20 is provided with, at a top portion, an ejection port 23 available to eject a cleaning liquid.

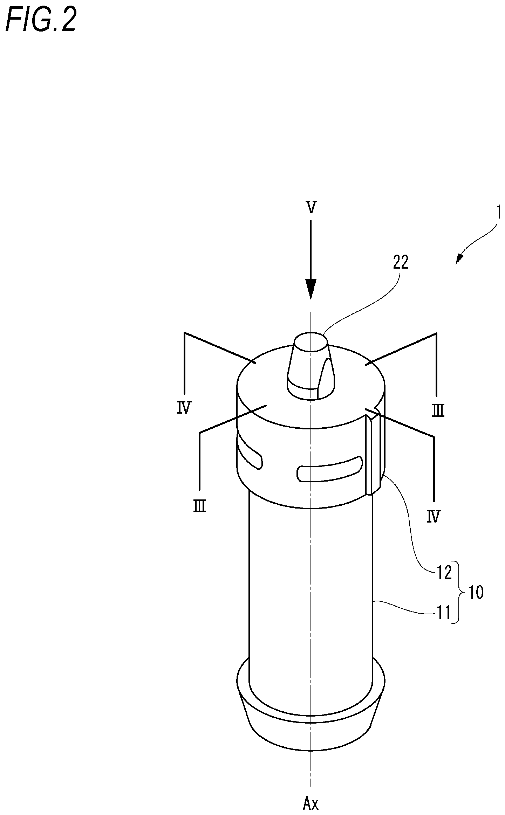

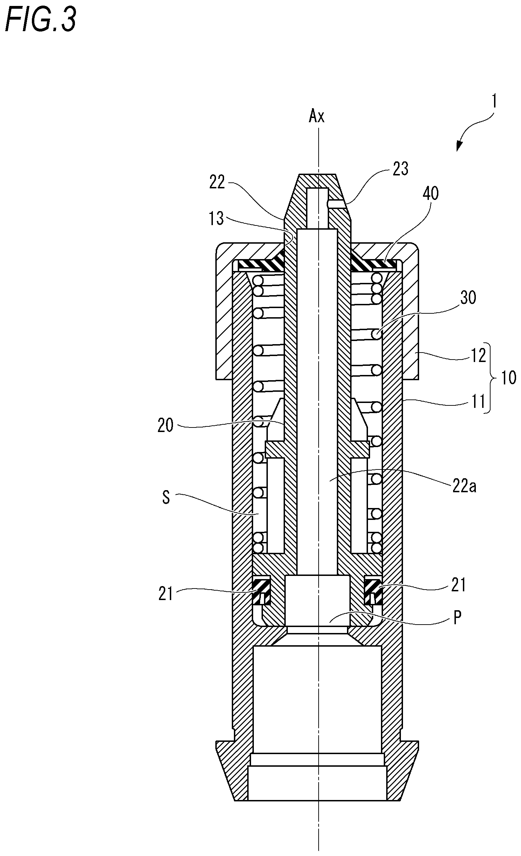

The piston 20 can be displaced in a direction of an axis Ax (see FIGS. 2 and 3) of the cylinder 10 relative to the cylinder 10. In the following description, an ejection port 23 side (an upper side in FIG. 3) in the axial Ax direction may be referred to as a front side, and a side (a lower side in FIG. 3) opposite to the ejection port 23 in the axial Ax direction may be referred to as a rear side.

When the piston 20 is displaced relative to the cylinder 10, the cleaning liquid is ejected from the ejection port 23. When the cleaner nozzle 1 cleans the sensor W, the piston 20 is displaced in the axial Ax direction of the cylinder 10, and the ejection port 23 moves to a position closer to the sensor W than when the cleaner nozzle 1 does not clean the sensor W. The sensor W can be cleaned when the cleaning liquid is ejected from the ejection port 23 in this state. That is, the cleaner nozzle 1 can be configured such that the ejection port 23 protrudes from a design surface of the vehicle only during operation, and does not protrude from the design surface of the vehicle during non-operation. Accordingly, the design of the vehicle is less likely to be impaired even when the cleaner nozzle 1 is mounted.

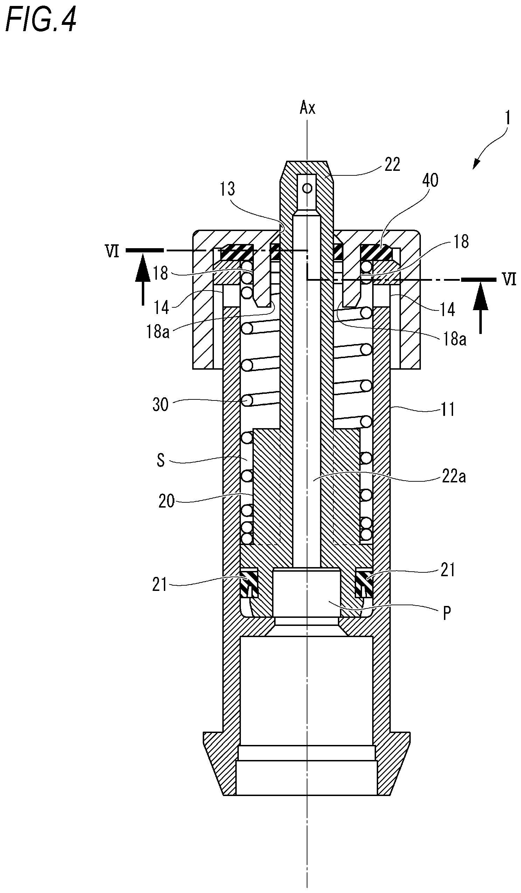

FIG. 2 is a perspective view of the cleaner nozzle 1 according to the first embodiment. FIG. 3 is a cross-sectional view taken along a line III-III in FIG. 2. FIG. 4 is a cross-sectional view taken along a line IV-IV in FIG. 2. As shown in FIGS. 2 to 4, the cylinder 10 includes a cylindrical portion 11 and a cap 12. The cap 12 closes at least a part of an opening of the cylindrical portion 11. The cap 12 is an example of a cover portion. In the cleaner nozzle 1 according to the present embodiment, the cap 12 has a hole 13 through which a shaft portion 22 to be described later can be inserted. The cap 12 is provided on one end portion of the cylindrical portion 11, and covers an opening of the one end portion of the cylindrical portion 11 except for the hole 13.

In the present embodiment, the cover portion (the cap 12) is separable from the cylindrical portion 11. However, the cover portion in the present disclosure is not limited to the example according to the present embodiment. For example, the cylindrical portion 11 and the cover portion may be integrally formed.

In the present embodiment, the cover portion (the cap 12) is provided on the one end portion of the cylindrical portion 11. Alternatively, the cover portion may be provided inside the cylindrical portion 11.

The piston 20 includes a first seal portion 21. The first seal portion 21 is in water-tight contact with an inner wall of the cylinder 10. The cylinder 10 is divided into a spring accommodating chamber S and a hydraulic pressure chamber P by the first seal portion 21.

The spring accommodating chamber S is a space defined between the cap 12 and the first seal portion 21 in two spaces inside the cylinder 10 partitioned by the first seal portion 21. A coil spring 30 is provided in the spring accommodating chamber S. The coil spring 30 returns the piston 20 to an original position by biasing the piston 20 that is displaced in the axial Ax direction and approaches the cap 12 in a direction away from the cap 12.

The spring accommodating chamber S is provided with an air inlet and outlet 14. When the piston 20 is displaced in the axial Ax direction and approaches the cap 12, a volume of the spring accommodating chamber S decreases, and air inside the spring accommodating chamber S flows out from the air inlet and outlet 14. Conversely, when the piston 20 is displaced in the direction away from the cap 12, the volume of the spring accommodating chamber S increases, and air flows into the spring accommodating chamber S through the air inlet and outlet 14. Accordingly, a change in static pressure of the spring accommodating chamber S can be prevented, and the piston 20 can be displaced more smoothly by the coil spring 30.

The hydraulic pressure chamber P is a space on a side opposite to the cap 12 relative to the first seal portion 21 in the two spaces inside the cylinder 10 partitioned by the first seal portion 21. The cleaning liquid is supplied to the hydraulic pressure chamber P from a supply source (not shown).

The piston 20 includes the shaft portion 22. The shaft portion 22 is inserted into the coil spring 30. The shaft portion 22 has the ejection port 23 that ejects the cleaning liquid. In the present embodiment, the ejection port 23 is provided in an end portion on a cap 12 side of the shaft portion 22. Alternatively, the ejection port 23 may be provided anywhere as long as the ejection port 23 is exposed when the piston 20 is displaced in the axial Ax direction.

The shaft portion 22 has an internal flow path 22a therein. The internal flow path 22a communicates with the hydraulic pressure chamber P. The internal flow path 22a also communicates with the ejection port 23.

When the supply source feeds the cleaning liquid into the hydraulic pressure chamber P and static pressure of the cleaning liquid in the hydraulic pressure chamber P increases, since the static pressure of the cleaning liquid in the hydraulic pressure chamber P increases, the piston 20 is displaced toward the cap 12 in the axial Ax direction against an elastic restoring force of the coil spring 30. When the elastic restoring force of the coil spring 30 and the static pressure are balanced, the piston 20 is no longer displaced. When the cleaning liquid is further fed into the hydraulic pressure chamber P in this state, the cleaning liquid is discharged from the ejection port 23 through the internal flow path 22a. Accordingly, as shown in FIG. 1, the piston 20 protrudes from the cap 12, and the sensor W can be cleaned in a state in which the ejection port 23 approaches the sensor W.

When the cleaning of the sensor W is completed, supply of the cleaning liquid from the supply source is stopped. The piston 20 is displaced in the direction away from the cap 12 by the elastic restoring force of the coil spring 30, and returns to a position before start of the cleaning.

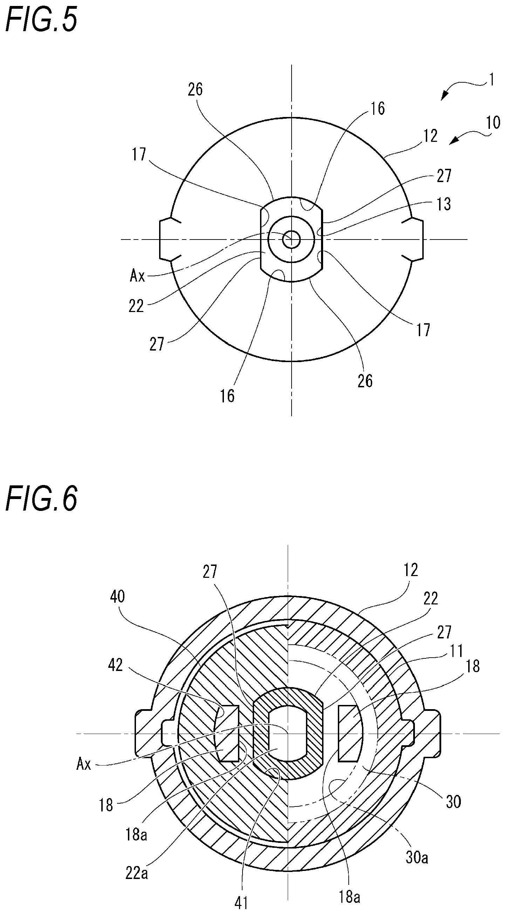

FIG. 5 is a view seen from a V direction (the axial Ax direction) in FIG. 2. As shown in FIG. 5, the shaft portion 22 and the hole 13 have corresponding shapes when viewed in the axial Ax direction. In the cleaner nozzle 1 according to the first embodiment, the shaft portion 22 has a so-called track-shaped shape including two parallel linear portions and two arc-shaped portions connecting the linear portions when viewed from the axial Ax direction. The arc-shaped portions are referred to as piston side curved surface portions 26, and the linear portions are referred to as piston side flat surface portions 27. An inner peripheral edge of the hole 13 has a shape corresponding to an outer peripheral edge of the shaft portion 22. That is, the hole 13 is defined by cylinder side curved surface portions 16 having shapes corresponding to the piston side curved surface portions 26 and cylinder side flat surface portions 17 having shapes corresponding to the piston side flat surface portions 27. The piston side flat surface portions 27 and the cylinder side flat surface portions 17 correspond to prevention portions that prevent relative rotation between the cylinder 10 and the piston 20. A plurality of piston side flat surface portions 27 and cylinder side flat surface portions 17 are preferably provided. In the present embodiment, each two of the piston side flat surface portions 27 and each two of the cylinder side flat surface portions 17 have the axis Ax sandwiched in between.

In order for the cleaner nozzle 1 to effectively clean an object to be cleaned such as the sensor W, the ejection port 23 needs to be directed at a direction of the object to be cleaned. In particular, a detection surface of the sensor W is usually a relatively small member, and the cleaner nozzle 1 is required to eject the cleaning liquid to an accurate position.

When the piston 20 is repeatedly displaced in the axial Ax direction relative to the cylinder 10, the piston 20 may unintentionally rotate about the axis Ax relative to the cylinder 10.

Thus, according to the cleaner nozzle 1 in the present embodiment, the displacement of the piston 20 about the axis Ax relative to the cylinder 10 is prevented by the piston side flat surface portions 27 and the cylinder side flat surface portions 17 that constitute the prevention portions. For this reason, a posture in which the ejection port 23 faces the object to be cleaned is easy to maintain. Accordingly, it is possible to provide the cleaner nozzle 1 in which the ejection port 23 is less likely to deviate from the object to be cleaned.

In the above-described embodiment, the prevention portions are the piston side flat surface portions 27 of the piston 20 and the cylinder side flat surface portions 17 of the cylinder 10 that face the piston side flat surface portions 27. According to the above configuration, the prevention portions can be provided in a simple configuration in which the piston side flat surface portions 27 are provided in the piston 20 as flat surface portions and the cylinder side flat surface portions 17 are provided in the cylinder 10 as flat surface portions.

By abutting the flat surfaces against each other, the relative displacement between the piston 20 and the cylinder 10 about the axis Ax can be kept within a predetermined range with higher reproducibility.

A part of the cylinder side flat surface portion 17 constitutes the hole 13 provided in the cap 12 (the cover portion). The piston side flat surface portion 27 is a portion in contact with the hole 13. When the piston 20 is inserted through the hole 13, the cylinder side flat surface portion 17, which is a part of the cap 12 (the cover portion) constituting the hole 13, and the shaft portion 22, which is a part of the piston 20, come into contact with each other. Since the prevention portions are provided at a portion where the cap 12 comes into contact with the piston 20, design of the prevention portions can be simplified.

According to the above configuration, at least two cylinder side flat surface portions 17 and at least two piston side flat surface portions 27 are provided. For this reason, the relative displacement between the piston 20 and the cylinder 10 about the axis Ax is easier to prevent than when only one cylinder side flat surface portion 17 and only one piston side flat surface portion 27 are provided.

According to the above configuration, at least two cylinder side flat surface portions 17 have the axis Ax sandwiched in between when viewed from the axial Ax direction. Since two or more cylinder side flat surface portions 17 are provided at separated positions, it is easy to more efficiently prevent the relative displacement between the cylinder 10 and the piston 20 about the axis Ax.

A guide portion 18 of the cleaner nozzle 1 according to the first embodiment will be described with reference to FIGS. 4 and 6. FIG. 6 is a cross-sectional view taken along a line VI-VI in FIG. 4.

The cap 12 includes a guide portion 18 that comes into contact with and holds the coil spring 30. As shown in FIG. 4, the guide portion 18 extends to a side opposite to the ejection port 23. That is, the guide portion 18 extends into the spring accommodating chamber S.

As shown in FIG. 6, two guide portions 18 are provided and have the axis Ax sandwiched in between. Each of the guide portions 18 is in contact with an inner peripheral surface 30a of the coil spring 30. The guide portion 18 has a flat surface 18a that is flat when viewed from the axial Ax direction. The flat surface 18a faces the piston side flat surface portion 27.

According to the above configuration, the guide portion 18 is provided on the cap 12 (the cover portion) such that the flat surface 18a of the guide portion 18 faces the piston side flat surface portion 27. At this time, the separate cap 12 is easily attached to the cylindrical portion 11 by inserting the piston 20 into the cylindrical portion 11 and fitting the cap 12 into the cylindrical portion 11 such that the guide portion 18 of the cap 12 faces the piston side flat surface portion 27. Accordingly, the cleaner nozzle 1 can be easily assembled.

According to the above configuration, since the coil spring 30 is supported by the guide portion 18, movement of the coil spring 30 relative to the cylinder 10 including the cap 12 (the cover portion) is restricted. Accordingly, it is possible to provide the cleaner nozzle 1 in which the coil spring 30 is less likely to deviate relative to the cylinder 10.

According to the above configuration, the guide portion 18 supports the inner peripheral surface 30a of the coil spring 30. For this reason, compared to a case in which the guide portion 18 supports an outer peripheral surface of the coil spring 30, the cleaner nozzle 1 is less likely to have a large size.

According to the above configuration, at least two guide portions 18 are provided and have the axis Ax sandwiched in between when viewed from the axial Ax direction. Since a plurality of guide portions 18 are separated from each other, the inner peripheral surface 30a of the coil spring 30 can be more effectively supported. Accordingly, it is possible to further prevent the coil spring 30 from deviating relative to the cylinder 10.

According to the above configuration, a cleaning fluid is ejected from the ejection port 23 through the internal flow path 22a when the static pressure of the cleaning fluid in the hydraulic pressure chamber P is increased. At this time, since the static pressure in the hydraulic pressure chamber P increases, the piston 20 is displaced forward so that the ejection port 23 approaches the sensor W. Since the coil spring 30 is provided in the spring accommodating chamber S, the displaced piston 20 can be returned to the original position.

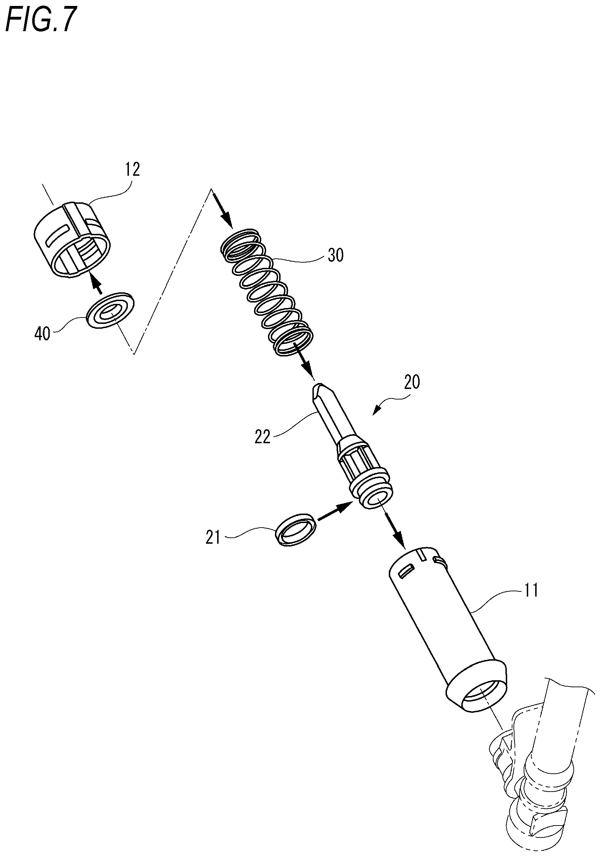

FIG. 7 is an exploded perspective view of the cleaner nozzle 1 according to the present embodiment. As shown in FIGS. 3, 4, and 7, the cleaner nozzle 1 according to the present embodiment includes a second seal portion 40. The second seal portion 40 is provided between the coil spring 30 and the cap 12. The second seal portion 40 is preferably made of rubber.

As shown in FIG. 6, the second seal portion 40 has a shaft portion through hole 41 through which the shaft portion 22 that is a part of the piston 20 passes, and a guide portion through hole 42 through which the guide portion 18 passes. In other words, the second seal portion 40 surrounds the shaft portion 22 and the guide portion 18.

According to the above configuration, the second seal portion 40 covers a periphery of the piston 20, and thus it is possible to reduce inflow of dust or the like from the periphery of the piston 20.

The second seal portion 40 has the guide portion through hole 42 through which the guide portion 18 passes. If the second seal portion 40 has elasticity and the guide portion through hole 42 has a diameter smaller than that of the guide portion 18, the second seal portion 40 is less likely to come off due to a frictional force with the guide portion 18 even in a state in which the second seal portion 40 is attached to the cover portion and the guide portion 18 faces downward.

### Modification 1

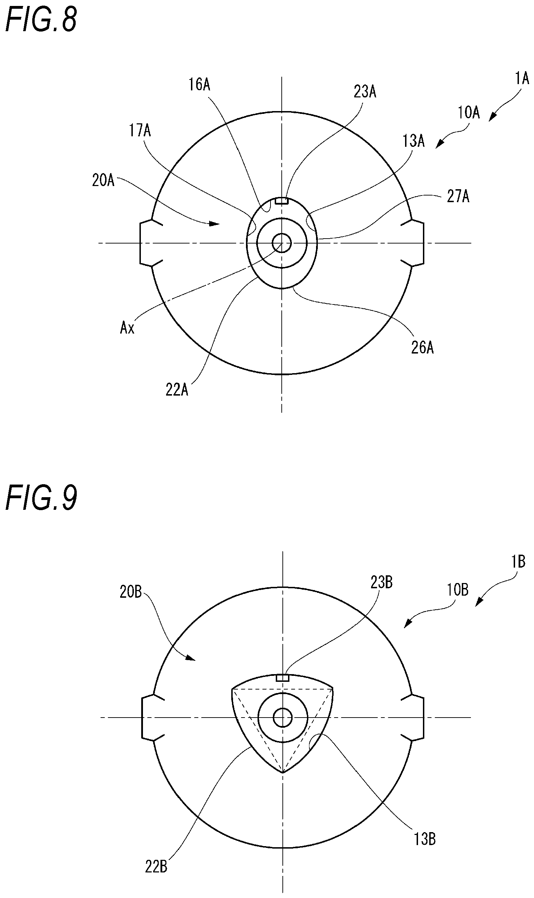

Next, a modification of a cleaner nozzle 1A according to the first embodiment will be described. FIG. 8 is a view of the cleaner nozzle 1A according to the first modification as viewed from the axial Ax direction. A shaft portion 22A (an example of a piston side prevention portion) of the cleaner nozzle 1A according to the first modification has an oval shape when viewed from the axial Ax direction. That is, the shaft portion 22A according to the first modification does not include the piston side curved surface portion 26 or the piston side flat surface portion 27. A hole 13A (an example of a cylinder side prevention portion) through which the shaft portion 22A is inserted also does not include the cylinder side curved surface portion 16 or the cylinder side flat surface portion 17, but has an oval shape when viewed from the axial Ax direction.

More specifically, in the cleaner nozzle 1A according to the first modification, when viewed in the axial Ax direction of the cylinder 10A, an outer peripheral edge of the piston side prevention portion includes, about the axis Ax, a piston side large diameter portion 26A having a large radial dimension and a piston side small diameter portion 27A having a small radial dimension. The piston side large diameter portion 26A and the piston side small diameter portion 27A of the piston side prevention portion are alternately provided along a circumferential direction.

When viewed from the axial Ax direction of the cylinder 10A, an inner peripheral edge of the cylinder side prevention portion includes, about the axis Ax, a cylinder side large diameter portion 16A having a large radial dimension and a cylinder side small diameter portion 17A having a small radial dimension. The cylinder side large diameter portions 16A and the cylinder side small diameter portions 17A of the cylinder side prevention portion are alternately provided along the circumferential direction. The piston side small diameter portion 27A faces the cylinder side small diameter portion 17A, and the piston side large diameter portion 26A faces the cylinder side large diameter portion 16A.

In this manner, in the cleaner nozzle 1A according to the first modification, prevention portions including the piston side prevention portion and the cylinder side prevention portion have a flat shape when viewed from the axial Ax direction of the cylinder 10A. For this reason, when a piston 20A rotates relative to the cylinder 10A, the piston side large diameter portion 26A comes into contact with the adjacent cylinder side large diameter portion 16A due to the flat shape of the prevention portions, and further rotation of the piston 20A is prevented. Accordingly, it is possible to provide the cleaner nozzle 1A in which an ejection port 23A is less likely to deviate from an object to be cleaned.

### Modification 2

FIG. 9 is a view of a cleaner nozzle 1B according to a second modification as viewed from an axial direction. In the cleaner nozzle 1B according to the second modification, a shaft portion 22B and a hole 13B that constitute prevention portions have a substantially polygonal shape. The "substantially polygonal shape" is basically a polygonal shape, and may also be rounded to an extent that relative rotation can be prevented. For example, as shown in FIG. 9, if the relative rotation can be prevented, parts of sides of a regular triangle may be curved. Further, parts corresponding to vertices of the regular triangle may be rounded as long as the relative rotation can be prevented. A basic shape of the substantially polygonal shape is not limited to a regular polygonal shape.

In this manner, in the cleaner nozzle 1B according to the second modification, even when the prevention portions provided in a cylinder 10B and a piston 20B have a substantially polygonal shape, the relative rotation of the cylinder 10B and the piston 20B is prevented by the parts corresponding to vertices of the substantially polygonal shape coming into contact with each other. Accordingly, it is possible to provide the cleaner nozzle 1B in which an ejection port 23B is less likely to deviate from an object to be cleaned. That is, a radial dimension of the prevention portions from a rotation center changes around the circumferential direction, a portion where the radial dimension of the piston 20B is large comes into contact with a portion where the radial dimension of the cylinder 10B is small during the relative rotation of the piston 20B and the cylinder 10B, and the shape of the prevention portion is not particularly limited as long as the prevention portions have a shape that prevents the relative rotation of the piston 20B and the cylinder 10B.

### Second Embodiment

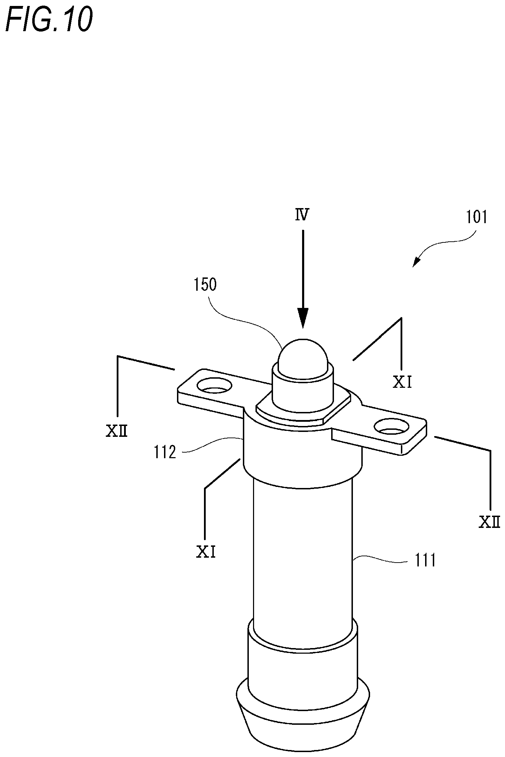

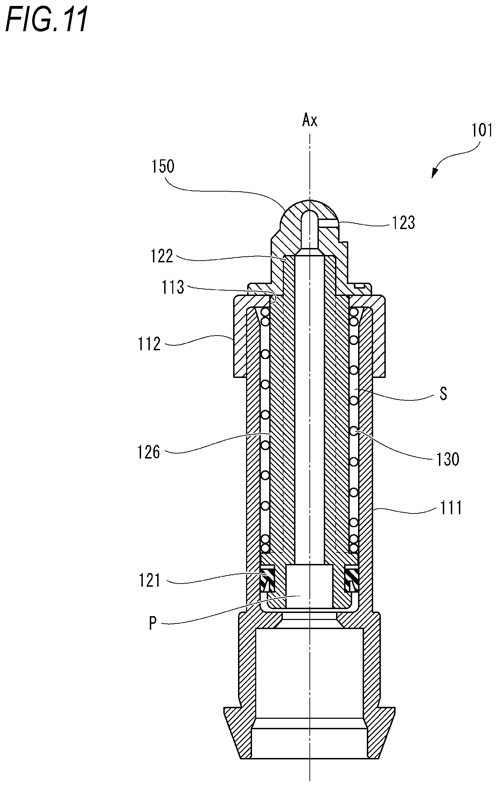

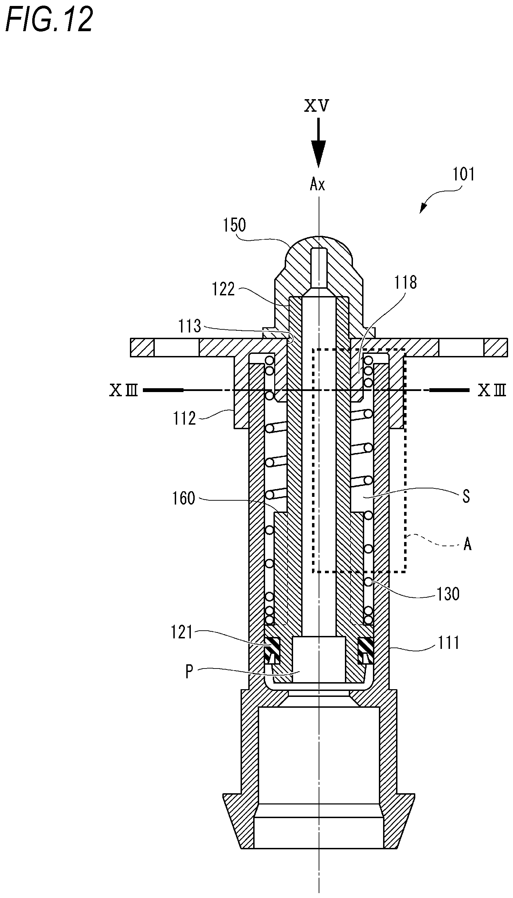

Next, a cleaner nozzle 101 according to a second embodiment will be described. FIG. 10 is a perspective view of the cleaner nozzle 101 according to the second embodiment. FIG. 11 is a cross-sectional view taken along a line XI-XI in FIG. 10. FIG. 12 is a cross-sectional view taken along a line XII-XII in FIG. 10.

An ejection port 123 of the cleaner nozzle 101 according to the second embodiment is not directly provided in the piston 20 as the ejection port 23 of the cleaner nozzle 1 according to the first embodiment, but is provided by attaching a covering portion 150 including the ejection port 123 to a shaft portion 122 of a piston 120. As shown in FIGS. 11 and 12, the covering portion 150 is preferably in contact with a periphery of a hole 113 provided in a cap 112 that closes a part of an opening of a cylindrical portion 111. At this time, it is possible to reduce inflow of dust or the like into the covering portion 150 from a gap between the hole 113 and the shaft portion 122.

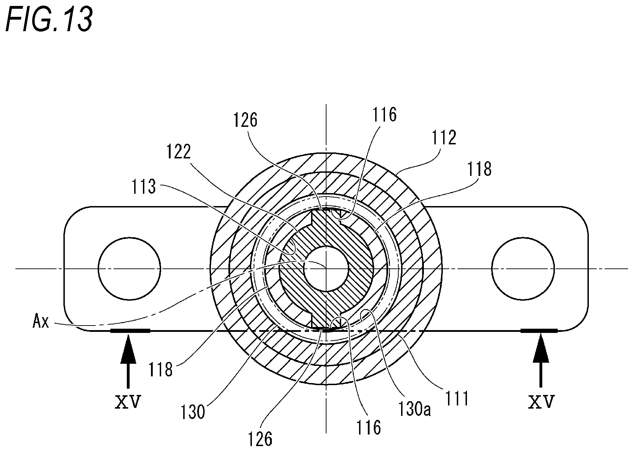

FIG. 13 is a cross-sectional view taken along a line XIII-XIII in FIG. 12. As shown in FIGS. 11 and 13, the shaft portion 122 of the cleaner nozzle 101 according to the second embodiment includes a protruding portion 126. The hole 113 provided in the cap 112 is provided with a recessed portion 116 (an example of a prevention portion) corresponding to the protruding portion 126. A plurality of protruding portions 126 are preferably provided. In the present embodiment, two protruding portions 126 are provided and have the axis Ax sandwiched in between. As shown in FIG. 11, the protruding portion 126 extends in the axial Ax direction.

When the piston 120 is displaced about the axis Ax relative to a cylinder 110, the protruding portion 126 and the recessed portion 116 come into contact with each other. Accordingly, relative rotation between the cylinder 110 and the piston 120 is prevented.

In this manner, according to the cleaner nozzle 101 according to the present embodiment, the displacement of the piston 120 about the axis Ax relative to the cylinder 110 is prevented by the recessed portion 116 (the prevention portion). For this reason, a posture in which the ejection port 123 faces an object to be cleaned is easy to maintain. Accordingly, it is possible to provide the cleaner nozzle 101 in which the ejection port 123 is less likely to deviate from the object to be cleaned.

Since the protruding portion 126 of the cleaner nozzle 101 according to the present embodiment extends in the axial Ax direction, even when the piston 120 is displaced in the axial Ax direction relative to the cylinder 110, the protruding portion 126 and the recessed portion 116 that is the prevention portion can remain continuous contact with each other.

Since two or more protruding portions 126 of the cleaner nozzle 101 according to the present embodiment are provided, the displacement of the piston 120 about the axis Ax relative to the cylinder 110 is more easily prevented compared to a case in which only one protruding portion 126 is provided.

The protruding portions 126 of the cleaner nozzle 101 according to the present embodiment have the axis Ax sandwiched in between when viewed from the axial Ax direction. That is, since the protruding portions 126 are separately provided, it is possible to more effectively prevent the relative displacement between the piston 120 and the cylinder 110 about the axis Ax.

As shown in FIGS. 11 and 12, similar to the cleaner nozzle 1 according to the first embodiment, space inside the cylinder 110 according to the second embodiment is partitioned into the hydraulic pressure chamber P and the spring accommodating chamber S by a first seal portion 121. A coil spring 130 that moves the piston 120 away from the cap 112 that is an example of a cover portion is provided inside the spring accommodating chamber S. The shaft portion 122 that is a part of the piston 120 is provided inside the coil spring 130. As shown in FIGS. 12 and 13, the protruding portion 126 is in contact with an inner peripheral surface 130a of the coil spring 130 and supports the coil spring 130.

The cap 112 is provided with a guide portion 118 extending rearward (opposite to the ejection port 123) in the axial Ax direction. The guide portion 118 preferably has an arc shape when viewed from the axial Ax direction. As shown in FIG. 13, the guide portion 118 is inserted into a space defined by an outer wall surface of the shaft portion 122 including the protruding portion 126 and the inner peripheral surface 130a of the coil spring 130. In the present embodiment, since two protruding portions 126 are provided, there are also two spaces. The guide portion 118 is inserted into each of the two spaces.

At this time, it is desirable that the guide portion 118 also come into contact with the inner peripheral surface 130a of the coil spring 130 to support the coil spring 130.

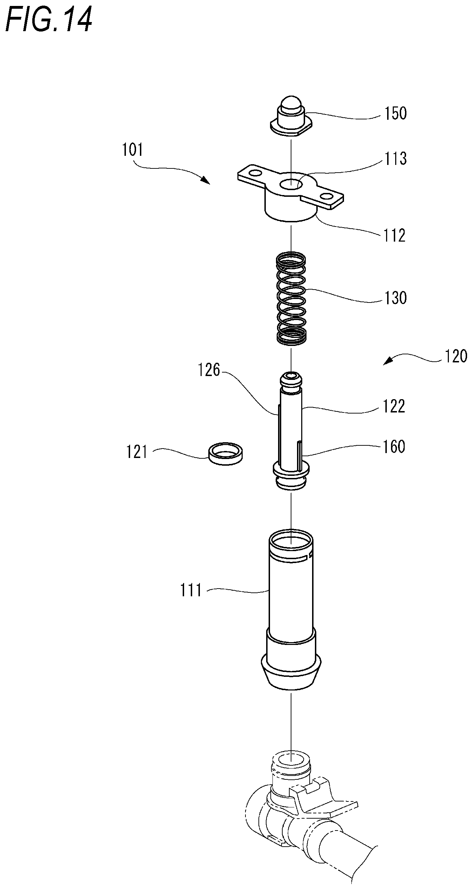

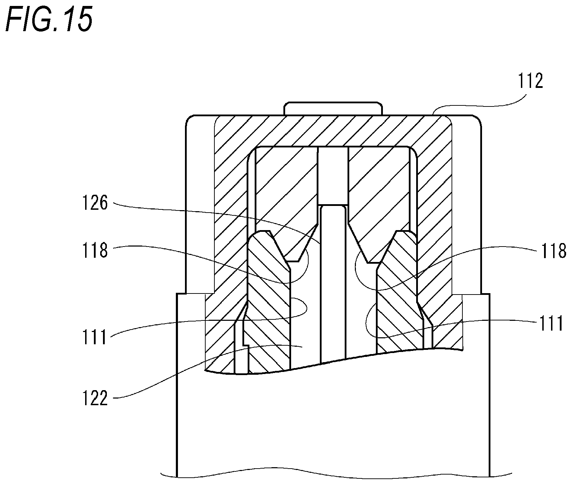

FIG. 14 is an exploded perspective view of the cleaner nozzle 101 according to the second embodiment. FIG. 15 is a cross-sectional view taken along a line XV-XV in FIG. 13. In FIG. 15, the coil spring 130 and the covering portion 150 are not shown for convenience of illustration.

When assembling the cleaner nozzle 101, first, the piston 120 to which the first seal portion 121 is attached is inserted into the cylindrical portion 111 of the cylinder 110.

Next, the coil spring 130 is attached to the piston 120. At this time, the protruding portion 126 provided on the shaft portion 122 of the piston 120 comes into contact with the inner peripheral surface 130a of the coil.

Next, the cap 112 separated from the cylindrical portion 111 is attached to the cylindrical portion 111. At this time, the cap 112 is attached to the cylindrical portion 111 by inserting and fitting the guide portion 118 provided in the cap 112 into the space defined by the piston 120 including the protruding portion 126 and the inner peripheral surface 130a of the coil. In other words, with the protruding portion 126 as a main body, the protruding portion 126 is accommodated in a gap between the guide portions 118.

As shown in FIG. 15, the gap between the guide portions 118 widens toward top ends of the guide portions 118. In other words, the guide portion 118 is formed in such a shape that a distance from the protruding portion 126 increases toward the top end thereof.

Since the coil spring 130 of the cleaner nozzle 101 according to the present embodiment is supported by the protruding portion 126, the coil spring 130 is less likely to deviate relative to the cylinder 110. Accordingly, even when the coil spring 130 repeatedly expands and contracts, an orientation of a biasing force by the coil spring 130 is less likely to change, and thus the piston 120 displaced toward the cap 112 that is the cover portion is easily returned to an original position.

The cleaner nozzle is not necessarily assembled in a state in which components are satisfactorily seen. In particular, the cap needs to be attached in a correct position and orientation in a state in which component details are invisible.

According to the cleaner nozzle 101 according to the present embodiment, the piston 120 is inserted into the cylindrical portion 111, and the guide portion 118 of the cap 112 is fitted into the space defined by an outer wall surface of the piston 120 including the protruding portion 126 and the coil spring 130. For this reason, the cap 112, which is a separate cover portion, is easily attached to the cylindrical portion 111. Accordingly, the cleaner nozzle 101 can be easily assembled.

In the cleaner nozzle 101 according to the present embodiment, the plurality of protruding portions 126 are accommodated in gaps of the guide portions 118. When the piston 120 is displaced about the axis Ax relative to the cylinder 110, the protruding portions 126 and the guide portions 118 come into contact with each other. This further prevents the relative displacement between the piston 120 and the cylinder 110 about the axis Ax.

In the present embodiment, the gaps between the arc-shaped guide portions 118 each have a shape that widens toward the top end (forward in the axial Ax direction). At this time, since the top ends of the gaps are widened, the guide portions 118 are easily inserted into the spaces defined by the outer wall surface of the piston 120 including the protruding portion 126 and the coil spring 130.

An assembling method according to the present embodiment includes a step of attaching the cap 112, which is a cover portion, to the cylindrical portion 111 so as to insert the guide portions 118 into the spaces defined by the outer wall surface of the piston 120 including the protruding portion 126 and the coil spring 130. In this step, since the cap 112 is attached to the cylindrical portion 111 so that the guide portions 118 are inserted into the spaces defined by the outer wall surface of the piston 120 including the protruding portion 126 and the coil spring 130, a position and an orientation of the cap 112 are guided.

A space defined by the cylindrical portion 111 and the cap 112 cannot be visually recognized by an operator, and thus it is difficult to perform accurate assembly. However, since the spaces into which the guide portions 118 are inserted are already defined as the spaces defined by the outer wall surface of the piston 120 including the protruding portion 126 and the coil spring 130, the cleaner nozzle 101 can be assembled with high accuracy.

Referring back to FIG. 12, the piston 120 of the cleaner nozzle 101 according to the second embodiment includes a restricting portion 160. The restricting portion 160 protrudes in a radial direction from the shaft portion 122 of the piston 120. In the cleaner nozzle 101 including both the protruding portion 126 and the restricting portion 160 as in the present embodiment, it is desirable that the protruding portion 126 and the restricting portion 160 be at an interval of 90° in the circumferential direction (about the axis Ax) of the shaft portion 122.

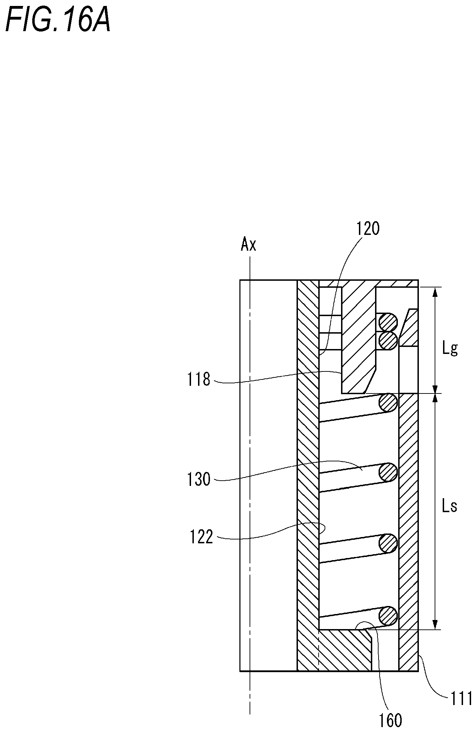

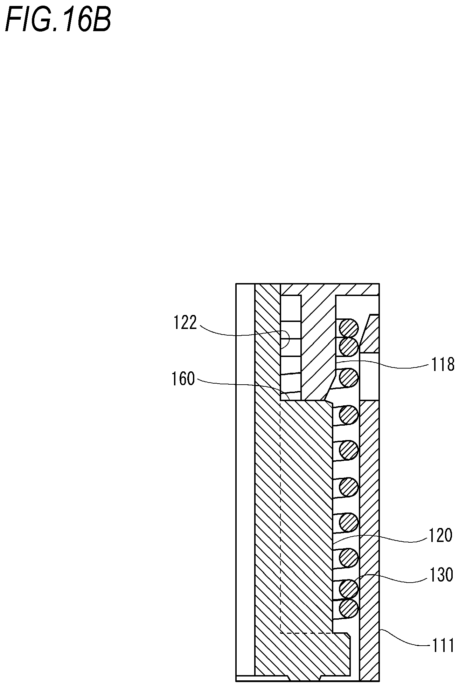

FIGS. 16A and 16B show a restriction of a stroke amount Ls by the restricting portion 160 and the guide portion 118. FIG. 16A is an enlarged view of a region A in FIG. 12.

A state shown in FIG. 16A is a state in which the restricting portion 160 and the guide portion 118 are separated from each other. On the other hand, a state shown in FIG. 16B is a state in which the piston 120 is displaced forward in the axial Ax direction relative to the cylinder 110 from the state shown in FIG. 16A, and the restricting portion 160 is in contact with the guide portion 118. When the restricting portion 160 and the guide portion 118 come into contact with each other, the piston 120 cannot be further displaced in the axial Ax direction. That is, a rear end portion of the guide portion 118 in the axial Ax direction determines a forward limit position of the displacement of the piston 120 in the axial Ax direction. By adjusting a length Lg of the guide portion 118 in the axial Ax direction, the stroke amount Ls (a displaceable length in the axial Ax direction) of the piston 120 can be adjusted.

However, in a vehicle on which a cleaner nozzle is mounted, a required stroke amount of a piston may differ for each vehicle type. This is because a distance between a position where the cleaner nozzle is mounted and an object to be cleaned such as a sensor may change for each vehicle type.

Even when the stroke amount Ls obtained for each vehicle type differs as described above, according to the cleaner nozzle 101 according to the present embodiment, it is not necessary to redesign the entire cleaner nozzle 101, and only the cap 112 including the guide portion 118 may be designed to have a length corresponding to the required stroke amount Ls. For this reason, it is possible to implement the cleaner nozzle 101 that can easily cope with various types of vehicles.

In the cleaner nozzle 101 according to the present embodiment, since a plurality of guide portions 118 are provided, the guide portions 118 can come into contact with the restricting portion 160 in a plurality of positions. Accordingly, it is possible to more effectively restrict the stroke amount Ls of the piston 120.

In addition, since the plurality of guide portions 118 are separated from each other with the axis Ax sandwiched in between, the guide portions 118 and the restricting portion 160 are easily stabilized in a contact state. Accordingly, when the stroke amount Ls of the piston 120 is restricted, it is possible to prevent the piston 120 from moving in an unintended direction.

According to the cleaner nozzle 101 in the present embodiment, since the guide portions 118 support the inner peripheral surface 130a of the coil spring 130, the movement of the coil spring 130 relative to the cap 112 and the cylinder 110 is restricted. This makes it less likely for the coil spring 130 to deviate in a radial direction relative to the cylinder 110.

The present disclosure has been described above based on the embodiments. The present embodiments are examples of the present disclosure, and the present disclosure is not limited to the above-described embodiments and can be appropriately modified or improved. In addition, materials, shapes, dimensions, numerical values, forms, numbers, arrangement places, and the like of components in the above-described embodiments are freely selected and are not limited as long as the present disclosure can be implemented.

For example, the prevention portion is not necessarily provided in the cover portion. Since the cylinder side prevention portion extends from the inner wall surface of the cylinder in the axial direction of the cylinder, the piston and the cylinder may come into contact with each other to prevent the relative rotation about the axis between the piston and the cylinder.

The present application is a Japanese patent application (JP2021-166302A) filed on October 8, 2021 and Japanese patent application (JP2021-166303A) filed on October 8, 2021. Contents disclosed in a Japanese patent application (JP2021-166304A) filed on October 8, 2021 and a Japanese patent application (JP2021-166305A) filed on October 8, 2021 are appropriately incorporated.

## Claims

1. A cleaner nozzle comprising:
a cylinder extending in an axial direction; and
a piston having an ejection port and being displaceable in the axial direction in the cylinder, wherein
the piston and the cylinder are provided with respective prevention portions that prevent relative displacement of the cylinder and the piston about an axis by coming into contact with each other.

2. The cleaner nozzle according to claim 1, wherein the prevention portions include a piston side flat surface portion in the piston and a cylinder side flat surface portion in the cylinder that faces the piston side flat surface portion.

3. The cleaner nozzle according to claim 1 or 2, wherein
the cylinder includes a cover portion covering at least a part of an opening,
the cover portion is provided with a hole through which the piston is inserted, and
a portion of the cover portion that constitutes the hole and a portion of the piston that is in contact with the hole constitute the prevention portions.

4. The cleaner nozzle according to claim 2 or 3, wherein
the cylinder includes a cylindrical portion and a cover portion that is separate from the cylindrical portion and covers at least a part of an opening of the cylindrical portion,
the cover portion is provided with a guide portion extending to a side opposite to the ejection port, and
the guide portion has a flat surface facing the piston side flat surface portion.

5. The cleaner nozzle according to any one of claims 2 to 4, wherein at least two cylinder side flat surface portions and at least two piston side flat surface portions are provided.

6. The cleaner nozzle according to claim 5, wherein at least two cylinder side flat surface portions are provided and have the axis sandwiched in between when viewed from the axial direction.

7. The cleaner nozzle according to claim 3, wherein
the piston includes a seal portion in water-tight contact with an inner wall of the cylinder and an internal flow path,
the cylinder is divided into a spring accommodating chamber defined between the cover portion and the seal portion and a hydraulic pressure chamber that is provided on a side opposite to the cover portion relative to the seal portion and communicates with the internal flow path, and
the spring accommodating chamber is provided with a coil spring therein that moves the piston away from the cover portion.

8. The cleaner nozzle according to claim 1, wherein the prevention portions have a flat shape when viewed from the axial direction of the cylinder.

9. The cleaner nozzle according to claim 1, wherein the prevention portions have a substantially polygonal shape when viewed from the axial direction of the cylinder.

10. A cleaner nozzle comprising:
a cylinder extending in an axial direction; and
a piston having an ejection port and being displaceable in the axial direction in the cylinder, wherein
the piston includes a protruding portion protruding in a radial direction of the cylinder, and
the piston is provided with a prevention portion that prevents displacement of the piston about an axis relative to the cylinder by coming into contact with the protruding portion.

11. The cleaner nozzle according to claim 10, wherein the protruding portion extends in the axial direction.

12. The cleaner nozzle according to claim 10 or 11, wherein at least two protruding portions are provided.

13. The cleaner nozzle according to claim 12, wherein at least two protruding portions are provided and have the axis sandwiched in between when viewed from the axial direction.

14. The cleaner nozzle according to claim 10, wherein
the cylinder includes a cover portion covering at least a part of an opening of the cylinder,
a coil spring that moves the piston away from the cover portion is provided inside the cylinder, and
the protruding portion supports an inner peripheral surface of the coil spring.

15. The cleaner nozzle according to claim 14, wherein
the cylinder includes a cylindrical portion and the cover portion that covers at least a part of an opening of the cylindrical portion and is separate from the cylindrical portion,
the cover portion is provided with a guide portion extending to a side opposite to the ejection port in the axial direction, and
the guide portion is disposed in a space defined by an outer wall surface of the piston including the protruding portion and the coil spring.

16. The cleaner nozzle according to claim 15, wherein
the guide portion has an arc shape when viewed from the axial direction, and
a gap between the guide portions extending in the axial direction is widened toward a top end.

17. A cleaner nozzle assembling method for assembling the cleaner nozzle according to claim 15 or 16, the method comprising:
a first step of inserting the piston into the cylindrical portion;
a second step of attaching the coil spring to the piston such that the protruding portion of the piston comes into contact with an inner peripheral surface of the coil spring; and
a third step of attaching the cover portion to the cylindrical portion such that the guide portion is inserted into a space defined by an outer wall surface of the piston including the protruding portion and the coil spring.

18. A cleaner nozzle comprising:
a cylinder; and
a piston that is displaceable in an axial direction of the cylinder in the cylinder, wherein
the cylinder includes a cover portion covering at least a part of an opening,
a coil spring that moves the piston away from the cover portion is provided inside the cylinder, and
a guide portion that extends toward the coil spring in the axial direction and comes into contact with the coil spring is provided in the cover portion.

19. The cleaner nozzle according to claim 18, wherein the guide portion supports an inner peripheral surface of the coil spring.

20. The cleaner nozzle according to claim 18, wherein at least two guide portions are provided and have an axis sandwiched in between when viewed from the axial direction.

21. The cleaner nozzle according to claim 19, wherein
the piston includes a linear protruding portion that protrudes in a radial direction of the cylinder and extends in the axial direction, and
the protruding portion is accommodated in a gap between two or more of the guide portions.

22. The cleaner nozzle according to any one of claims 18 to 21, wherein
the piston includes a first seal portion in water-tight contact with an inner wall of the cylinder and an internal flow path,
the cylinder is divided into a spring accommodating chamber defined between the cover portion and the first seal portion and a hydraulic pressure chamber that is provided on a side opposite to the cover portion relative to the first seal portion and communicates with the internal flow path, and
the coil spring is provided in the spring accommodating chamber.

23. The cleaner nozzle according to any one of claims 18 to 22, wherein
a second seal portion is provided between the cover portion and the coil spring, and
the second seal portion has a through hole through which the piston and the guide portion pass.

24. A cleaner nozzle comprising:
a cylinder; and
a piston displaceable in an axial direction of the cylinder relative to the cylinder, wherein
the cylinder includes a cylindrical portion and a cover portion that covers at least a part of an opening of the cylindrical portion and is separate from the cylindrical portion, and
the cover portion is provided with a guide portion that extends in the axial direction and restricts a length of the piston displaceable in the axial direction by coming into contact with the piston.

25. The cleaner nozzle according to claim 24, wherein at least two guide portions are provided and have an axis sandwiched in between when viewed from the axial direction.

26. The cleaner nozzle according to claim 24 or 25, wherein
a coil spring that moves the piston away from the cover portion is provided inside the cylinder, and
the guide portion supports an inner peripheral surface of the coil spring.
